Europäisches Patentamt

European Patent Office

Office européen des brevets

(11) Numéro de publication: **0 279 718**
**A1**

(12) **DEMANDE DE BREVET EUROPEEN**

(21) Numéro de dépôt: **88400111.6**

(22) Date de dépôt: **19.01.88**

(51) Int. Cl.⁴: **H 01 B 7/28**

(30) Priorité: **20.01.87 FR 8700591**

(43) Date de publication de la demande:
**24.08.88 Bulletin 88/34**

(84) Etats contractants désignés:
**AT BE CH DE ES GB GR IT LI LU NL SE**

(71) Demandeur: **NORDLYS, Société Anonyme dite:**
**17, Rue Emile Hié**
**F-59270 Bailleul (FR)**

(72) Inventeur: **Seuzaret, Loïc**
**10 Rue du Stade**
**F-59193 Erquinghem Lys (FR)**

(74) Mandataire: **Leszczynski, André**
**Cabinet Dupuy & Loyer 14, rue La Fayette**
**F-75009 Paris (FR)**

(54) **Matériau d'étanchéité et son application à l'industrie du câble.**

㉗ L'invention est relative à un matériau d'étanchéité en forme de nappe, de ruban ou de fil.

Il comporte un support revêtu sur l'une au moins de ses faces d'une composition contenant des microsphères thermoexpansibles, les microsphères se trouvant à l'état non-expansé.

EP 0 279 718 A1

Bundesdruckerei Berlin

**Description**

<u>MATERIAU D'ENTANCHEITE ET SON APPLICATION A L'INDUSTRIE DU CABLE</u>

La présente invention est relative à un matériau d'étanchéité en forme de nappe, de ruban ou de fil et à une de ses applications possibles pour former des couches assurant l'étanchéité longitudinale de câbles tels que des câbles de transport d'énergie et des câbles de télécommunications.

Les câbles utilisés pour le transport d'énergie ou d'informations dans le domaine des télécommunications comportent habituellement une âme constituée d'un faisceau de conducteurs ou fibres optiques, une gaine extérieure, généralement en matière thermoplastique, appliquée par extrusion, et une pluralité de couches intermédiaires destinées à assurer des propriétés d'isolation ou de conduction électriques et/ou à assurer aux câbles des propriétés de résistance mécanique et/ou de résistance vis-à-vis de la corrosion, ainsi que généralement au moins une couche destinée à assurer une étanchéité longitudinale en empêchant toute propagation d'eau entrée accidentellement soit au niveau des extrémités du câble, soit au niveau d'un percement de la gaine extérieure.

Il existe actuellement différentes techniques permettant d'assurer une telle étanchéité longitudinale d'un câble.

Une technique couramment utilisée consiste à remplir les vides existant dans l'espace compris entre l'âme du câble et sa gaine extérieure à l'aide d'un produit hydrophobe tel que celui connu sous le nom de "petrol-jelly".

Ce produit est en général injecté à chaud et, en se rétractant au moment de son refroidissement, laisse des vides. Un tel remplissage incomplet des volumes libres à l'intérieur du câble n'assure alors qu'une étanchéité insuffisante.

Une autre technique également connue pour réaliser une étanchéité longitudinale de câbles consiste à utiliser pour former la ou les couches d'étanchéité un matériau composite apte à gonfler en présence d'eau de manière à former un bouchon à l'intérieur du câble empêchant la propagation de l'eau dans celui-ci.

Des exemples de matériaux composites utilisant une poudre de polymère hydroexpansible sont par exemple décrits dans la demande de brevet français 81 02863.

Paradoxalement, avec cette technique, il est nécessaire pour assurer l'étanchéité longitudinale du câble que de l'eau pénètre dans celui-ci afin de déclencher le processus de gonflement.

On connaît par ailleurs d'après le brevet US 3 676 288 un matériau ayant de bonnes capacités d'absorption d'eau et d'humidité constitué d'une nappe de fibres non-tissées, liées par un liant contenant des microsphères thermoexpansibles, les microsphères étant expansées lors de l'étape de chauffage destinée à provoquer la polymérisation du liant lors de la fabrication du matériau.

Un tel matériau se présente donc sous la forme d'une nappe non-tissée revêtue d'une pâte liante expansée.

Un tel matériau n'a pu être utilisé dans la fabrication de câbles, compte-tenu du fait de son épaisseur importante nécessitant, pour des utilisations en grande longueur, des bobines de stockage de grandes dimensions et difficiles à manipuler. Ce matériau présente en outre l'inconvénient de ne pas remplir complètement les espaces vides existant dans le câble d'une part entre l'âme de celui-ci et la couche constituée par le matériau d'étanchéité et d'autre part entre cette couche et la gaine extérieure.

La présente invention se propose de réaliser un matériau évitant ces inconvénients et se prêtant particulièrement bien à la réalisation d'étanchéités longitudinales de câbles, bien que cette application ne soit nullement limitative.

Le matériau d'étanchéité selon l'invention se caractérise par le fait qu'il comporte un support, notamment au moins une nappe de fibres non-tissées et liées, le support étant revêtu sur au moins l'une de ses faces d'une composition contenant des microsphères thermoexpansibles, les microsphères se trouvant à l'état non-expansé.

Ainsi, selon l'invention, le matériau ne présente, après sa fabrication et pendant toutes ses phases de stockage et de transport sur le lieu d'utilisation, qu'un faible volume du fait de son épaisseur réduite. L'expansion des microsphères n'a lieu qu'une fois le matériau mis en place dans la structure dont il doit assurer l'étanchéité. Cette expansion se fait par apport de chaleur à une température supérieure à la température d'expansion des microsphères. Dans le cadre de l'application à la réalisation de couches d'étanchéité dans les câbles, l'apport de chaleur est de préférence celui résultant de la mise en place, par extrusion à chaud, de la gaine externe du câble.

Dans cette application particulière, le gonflement à chaud du matériau selon l'invention offre l'avantage de remplir les vides existant dans la structure du câble.

Cet effet de remplissage est encore favorisé par la présence dans le câble ou par application préalable sur le matériau d'étanchéité d'un produit hydrophobe, tel que de la "petrol-jelly", qui est déplacé lors du gonflement du matériau et remplit totalement les vides dans le câble ainsi que le cas échéant les vides pouvant subsister dans le matériau d'étanchéité lui-même entre les microsphères expansées.

Le support selon l'invention peut notamment être constitué d'une matière textile, tissée ou en fil, d'une matière plastique en feuille ou film, ou d'un complexe de ces matériaux entre eux et/ou avec des fibres non-tissées et liées.

Le matériau selon l'invention est de préférence obtenu par imprégnation d'au moins une nappe de fibres non-tissées et liées, à l'aide d'une dispersion en milieu aqueux ou solvant de microsphères non-expansées.

**0 279 718**

En milieu aqueux, la dispersion comporte en outre un épaississant, tel qu'une résine polyacrylique, additionné le cas échéant d'un liant synthétique tel qu'une résine acrylate-styrène acrylique. Dans le cas d'un épaississant formé d'une résine polyacrylique, la composition est réglée à un pH légèrement basique, par exemple de l'ordre de 9, par adjonction par exemple d'ammoniaque. L'imprégnation de la nappe non-tissée par une telle composition à l'état liquide est réalisée de préférence par la technique connue de foulardage. En milieu solvant, notamment un solvant volatil tel que par exemple l'acétate d'éthyle, la dispersion comporte en outre une résine liante telle que par exemple l'acétochlorure de vinyle.

La nappe imprégnée dans toute son épaisseur est ensuite séchée dans un four à une température inférieure à la température de gonflement des microsphères, c'est-à-dire à une température inférieure à 90°C, cette température étant habituellement de l'ordre de 70°C.

Il est possible selon l'invention d'introduire dans la composition, à l'état liquide, des charges, telles que par exemple des pigments colorés permettant l'identification de différents grades de microsphères ou d'adjuvants permettant de conférer au matériau des propriétés complémentaires, par exemple de conduction d'électricité (noir de carbone conducteur par exemple).

L'imprégnation et le séchage s'effectuent avantageusement de manière à obtenir une dépose après séchage comprise avantageusement entre environ 5 et environ 80 g/m2, de préférence de l'ordre de 40 g/m2.

On peut ensuite si nécessaire procéder à un calandrage du matériau.

L'épaisseur du matériau selon l'invention est ainsi avantageusement comprise entre environ 20 et environ 75/100è de mm, le matériau après gonflement sur le site d'utilisation pouvant avoir une épaisseur variant entre 1 et 7 mm.

A l'état sec et avant gonflement, la composition d'imprégnation du matériau selon l'invention présente avantageusement un rapport en poids microsphères thermoexpansibles/épaississant (éventuellement additionné de liant synthétique) ou résine liante compris entre environ 1 et environ 125.

Les microsphères utilisables dans le cadre de la présente invention peuvent être de tous types appropriés connus, par exemple des copolymères de chlorure de vinylidène et d'acrylonitrile, des copolymères d'acrylonitrile et de méthylmétacrylate ou d'autres copolymères présentant des propriétés analogues. Ces microsphères renferment un agent gonflant sous l'effet de la chaleur tel que l'isobutane.

On va maintenant décrire de manière nullement limitative des exemples de mises en oeuvre de l'invention.

Exemple 1 :

On utilise comme support une nappe non tissée de fibres polyester liées par un liant acrylique-styrène acrylique dans la proportion de 70 % en poids de fibres et 30 % de liant, la nappe présentant un poids de 40 g/m2.

On imprègne cette nappe par foulardage à l'aide de la composition suivante :

|  | Parties en poids |
|---|---|
| – eau......................................... | 82,1 % |
| – épaississant : résine polyacrylique ROHAGIT SD15 (Roëhm)........ | 12,5 % |
| – microsphères : EXPANCEL 551 (Kemanord)..... | 5 % |
| – ammoniaque................................ | 0,4 % |

On effectue l'imprégnation de manière à obtenir une dépose après la phase ultérieure de séchage de 5 g/m2.

Le séchage est effectué en faisant passer la nappe imprégnée dans un four à une température de 70°C.

Exemple 2 :

On utilise comme support la même nappe non tissée de fibres que dans l'exemple 1.

On imprègne cette nappe par foulardage à l'aide de la composition suivante :

|  | Parties en poids |
|---|---|
| – eau..................................................... | 54 % |
| – épaississant : résine polyacrylique | |
| ROHAGIT SD15 (Roëhm)........ | 1,8 % |
| – microsphères : MICROPEARL F30 | |
| (Matsumoto Yushi–Seiyako)..... | 43,8 % |
| – ammoniaque................................. | 0,4 % |

On effectue l'imprégnation de manière à obtenir une dépose après la phase ultérieure de séchage de 40 g/m2.

Le séchage est effectué en faisant passer la nappe imprégnée dans un four à une température de 70°C.

Exemple 3 :

On utilise comme support une nappe non tissée de fibres polyester liées par un liant acrylique dans la proportion en poids de 57 % de fibres et 43 % de liant, la nappe présentant un poids de 70 g/m2.

On imprègne cette nappe par foulardage à l'aide de la composition suivante :

|  | Parties en poids |
|---|---|
| – eau..................................................... | 47,7 % |
| – épaississant : hydroxyéthylcellulose....... | 0,9 % |
| – microsphères : EXPANCEL 461 (Kemanord)..... | 51,4 % |

On effectue l'imprégnation de manière à obtenir une dépose après la phase ultérieure de séchage de 80 g/m2.

Le séchage est effectué en faisant passer la nappe imprégnée dans un four à une température de 70°C.

Exemple 4 :

On utilise comme support un tissu polyester à armure satin d'un poids de 80 g/m2.

On imprègne ce tissu par enduction à la racle à l'aide de la composition suivante :

|  | Parties en poids |
|---|---|
| – eau..................................................... | 43,7 % |
| – épaississant : ROHAGIT SD15................ | 6,6 % |
| – microsphères : MICROPEARL F30.............. | 49,2 % |
| – ammoniaque................................. | 0,5 % |

On effectue l'imprégnation de manière à obtenir une dépose après la phase ultérieure de séchage de 75 g/m2.

Le séchage est effectué en faisant passer la nappe imprégnée dans un four de température de 75°C.

Exemple 5 :

On utilise comme support un film de polyester d'une épaisseur de 40 mm.

On revêt ce film par foulardage à l'aide de la composition suivante :

# 0 279 718

|                                                      | Parties en poids |
|------------------------------------------------------|:----------------:|
| – eau.........................................        | 20,3 %           |
| – épaississant : ROHAGIT SD15...............          | 0,8 %            |
| – liant : VINAMUL EP7045 (Vinamul)...........         | 40,7 %           |
| – microsphères : EXPANCEL 642...............          | 37,8 %           |
| – ammoniaque................................          | 0,4 %            |

On effectue l'imprégnation de manière à obtenir une dépose après la phase ultérieure de séchage de 10 g/m2.

Le séchage est effectué en faisant passer le film imprégné dans un four de température de 75°C.

Exemple 6 :

On utilise comme support un fil guipé polyester de numéro métrique 14.

On imprègne ce fil par foulardage à l'aide de la composition suivante :

|                                              | Parties en poids |
|----------------------------------------------|:----------------:|
| – eau.....................................    | 81 %             |
| – épaississant : carboxyméthylcellulose...... | 0,5 %            |
| – microsphères : EXPANCEL 461 (Kemanord).....  | 18,5 %           |

On effectue l'imprégnation de manière à obtenir une dépose

On effectue l'imprégnation de manière à obtenir une dépose après la phase ultérieure de séchage de 10 mg/m linéaire.

Le séchage est effectué en faisant passer le fil imprégné dans un four de température de 70°C.

Exemple 7 :

On utilise comme support une nappe non tissée de fibres polyester liées par un liant acrylique-styrène acrylique telle que celle de l'exemple 3.

On imprègne cette nappe par un procédé flexographique à l'aide de la composition suivante :

|                                                  | Parties en poids |
|--------------------------------------------------|:----------------:|
| – solvant : 85 % en poids d'acétate d'éthyle     |                  |
| 15 % en poids de 2-nitropropane..                | 50 %             |
| – résine liante : acétochlorure de vinyle        |                  |
| SOP561 (soprodim).........                        | 23 %             |
| – microsphères : MICROPEARL FD80............      | 27 %             |

On effectue l'imprégnation de manière à obtenir une dépose après la phase ultérieure de séchage de 15 g/m2.

Le séchage est effectué en ventilant la nappe imprégnée et en la faisant passer rapidement devant une rampe à infra-rouges.

On va maintenant décrire des exemples d'utilisation du matériau selon l'invention en tant qu'étanchéité longitudinale de câbles.

Exemple A :

On réalise un câble téléphonique du type comportant en succession un noyau formé d'un faisceau de conducteurs ou de fibres optiques, une couche constituée d'un film polyester, une couche d'étanchéité longitudinale, une couche d'aluminium et enfin une gaine extérieure.

La couche d'étanchéité longitudinale est réalisée en posant en long un ruban réalisé en matériau préparé selon l'exemple 1 ci-dessus, imprégné d'une matière hydrophobe telle que de la "petrol-jelly".

On extrude sur la couche d'aluminium recouvrant la couche d'étanchéité selon l'invention une gaine extérieure en polyéthylène à une température de 190°C.

5

L'apport de chaleur provoque l'expansion des microsphères de la couche d'étanchéité et le gonflement de cette couche l'amenant à repousser et comprimer les couches adjacentes respectivement en aluminium et en film polyester, de façon à remplir l'ensemble des vides de la structure du câble.

Exemple B :

On réalise un câble téléphonique comportant en succession un noyau constitué d'un faisceau de 12 fibres optiques, une couche d'étanchéité longitudinale, une couche d'aluminium et une gaine extérieure.

Les fibres optiques du noyau sont préalablement imprégnées d'une matière telle que de la petrol-jelly et la couche d'étanchéité longitudinale est réalisée par un ruban formé par le matériau réalisé selon l'exemple 2 ci-dessus.

Lors de l'extrusion de la gaine extérieure en polyéthylène à une température de 200°C, l'apport de chaleur provoque le gonflement du matériau d'étanchéité qui, en liaison avec la petrol-jelly mise en plase entre les éléments de l'âme du câble, réalise un remplissage parfait des vides dans la structure du câble.

Exemple C :

On réalise un câble de transport d'énergie comportant une âme formée d'un faisceau de conducteurs, une couche d'isolation intérieure disposée entre deux couches conductrices, une couche d'étanchéité longitudinale, une couche d'écran, une masse de remplissage souple et enfin une gaine extérieure extrudée.

La couche d'étanchéité est réalisée à l'aide d'un ruban formé par le matériau réalisé selon l'exemple 2 ci-dessus et auquel on a incorporé du noir de carbone conducteur.

L'apport de chaleur dû à l'extrusion de la gaine extérieure en PVC à une température de 195°C provoque le gonflement du ruban constituant la couche d'étanchéité en repoussant vers l'extérieur et respectivement vers l'intérieur les couches adjacentes de façon à remplir les vides existant dans la structure.

Grâce à l'invention il est également possible de supprimer la masse de remplissage entre la gaine extérieure et la couche formant écran.

Bien entendu, d'autres structures de câbles peuvent être réalisées en utilisant pour former une ou plusieurs couches d'étanchéité longitudinale un matériau thermoexpansible selon la présente invention.

Bien que l'invention ait été décrite en liaison avec des exemples de réalisation particuliers et en liaison avec une application particulière à l'industrie du câble, il est bien évident qu'elle n'y est nullement limitée et qu'on peut par ailleurs lui apporter de nombreuses variantes et modifications sans pour autant sortir ni de son cadre, ni de son esprit.

## Revendications

1. Matériau d'étanchéité, caractérisé par le fait qu'il comporte un support revêtu sur l'une au moins de ses faces d'une composition contenant des microsphères thermoexpansibles, les microsphères se trouvant à l'état non-expansé.

2. Matériau d'étanchéité selon la revendication 1, caractérisé par le fait que le support est constitué par au moins une nappe de fibres non-tissées et liées.

3. Matériau d'étanchéité selon la revendication 1, caractérisé par le fait que le support est constitué d'un élément choisi parmi les matières textiles tissées ou en fils, les matières plastiques en feuilles ou en films et les complexes de ces matériaux entre eux et/ou avec des fibres non-tissées et liées.

4. Matériau d'étanchéité selon l'une quelconque des revendications 1 à 3, caractérisé par le fait qu'il comporte une quantité de composition de revêtement comprise entre environ 5 et environ 80 g/m2, de préférence de l'ordre de 40 g/m2.

5. Matériau d'étanchéité selon l'une quelconque des revendications précédentes, caractérisé par le fait qu'il comporte une épaisseur comprise entre environ 20 et environ 75/100è de mm.

6. Matériau d'étanchéité selon l'une quelconque des revendications précédentes, caractérisé par le fait que la composition de revêtement comporte un épaississant et/ou un liant, le rapport en poids microsphères thermoexpansibles/épaississant et/ou liant étant avantageusement compris entre environ 1 et environ 125.

7. Procédé de fabrication d'un matériau selon l'une quelconque des revendications 1 à 6, caractérisé par le fait que l'on imprègne un support à l'aide d'une dispersion en milieu aqueux ou solvant de microsphères non-expansées contenant, en milieu aqueux, un épaississant, additionné le cas échéant d'un liant synthétique, et, en milieu solvant une résine liante.

8. Procédé selon la revendication 7, caractérisé par le fait que le support est constitué par au moins une nappe de fibres non-tissées et liées.

9. Procédé selon la revendication 7, caractérisé par le fait que le support est constitué d'un élément choisi parmi les matières textiles tissées ou en fils, les matières plastiques en feuilles ou en films et les complexes de ces matériaux entre eux et/ou avec des fibres non-tissées et liées.

10. Procédé selon l'une quelconque des revendications 7 à 9, caractérisé par le fait que dans le cas d'une dispersion en milieu aqueux l'épaississant est une résine polyacrylique et que le liant synthétique est une résine acrylate-styrène acrylique, le pH de la composition étant réglé à une valeur légèrement basique, notamment de l'ordre de 9, notamment par adjonction d'ammoniaque.

11. Procédé selon l'une quelconque des revendications 8 et 10, caractérisé par le fait que l'imprégnation de la nappe non-tissée est réalisée par foulardage.

12. Utilisation du matériau d'étanchéité selon l'une quelconque des revendications 1 à 6, en tant que couche d'étanchéité longitudinale dans la fabrication de câbles tels que des câbles de transport d'énergie et des câbles de télécommunications.

13. Utilisation selon la revendication 12, caractérisée par le fait que le matériau est revêtu d'une matière hydrophobe telle que de la petrol-jelly.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-2 011 154 (BICC) <br> * En entier * <br> --- | 1,3,12, 13 | H 01 B 7/28 |
| X | DE-A-2 751 641 (AEG) <br> * Revendications 1-6 * <br> --- | 1,3,7,9 ,12 | |
| X | DE-A-3 409 364 (SIEMENS) <br> * Revendications 1-8 * <br> --- | 1,12 | |
| A | EP-A-0 155 430 (SIEMENS) <br> * Revendications 1-4 * <br> --- | 1 | |
| A | EP-A-0 151 900 (SIEMENS) <br> * Revendications 1-6 * <br> --- | 1 | |
| A | EP-A-0 022 415 (LES CABLES DE LYON) <br> * Revendications 1-8 * <br> ----- | 1 | |

DOMAINES TECHNIQUES RECHERCHES (Int. Cl.4)

H 01 B 7/00

Le présent rapport a été établi pour toutes les revendications

| Lieu de la recherche | Date d'achèvement de la recherche | Examinateur |
|---|---|---|
| LA HAYE | 22-04-1988 | DROUOT M.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)